# EUROPÄISCHE PATENTSCHRIFT

(11) **EP 4 315 090 B1**
(45) Veröffentlichungstag und Bekanntmachung des Hinweises auf die Patenterteilung: **02.04.2025**
(21) Anmeldenummer: 22733860.5
(22) Anmeldetag: 20.05.2022
(51) Int. Cl.: G06F 15/173, G06F 15/78

(54) **VERFAHREN ZUM LAUFZEITBASIERTEN KONFIGURIEREN EINER GERÄTEINTERNEN SIGNALÜBERTRAGUNG IN EINEM STEUERGERÄT SOWIE ENTSPRECHEND BETREIBBARES STEUERGERÄT UND KRAFTFAHRZEUG**
VERFAHREN ZUM LAUFZEITBASIERTEN KONFIGURIEREN EINER GERÄTEINTERNEN SIGNALÜBERTRAGUNG IN EINEM STEUERGERÄT SOWIE ENTSPRECHEND BETREIBBARES STEUERGERÄT UND KRAFTFAHRZEUG
PROCÉDÉ DE CONFIGURATION BASÉ SUR LE TEMPS DE VOL D'UNE TRANSMISSION DE SIGNAL INTERNE À UN DISPOSITIF DANS UN DISPOSITIF DE COMMANDE, ET DISPOSITIF DE COMMANDE ET VÉHICULE À MOTEUR POUVANT AINSI ÊTRE ACTIONNÉS

(30) Priorität: 02.06.2021 DE 102021114282
(43) Veröffentlichungstag der Anmeldung: 07.02.2024
(73) Patentinhaber: Audi AG, 85045 Ingolstadt (DE)
(72) Erfinder: MILED, Hatem, 85057 Ingolstadt (DE); HÄUBLEIN, Konrad, 91054 Erlangen (DE); RASCHE, Robert, 85055 Ingolstadt (DE); SERSULTANOV, Usam, 85049 Ingolstadt (DE)
(74) Vertreter: Hofstetter, Schurack & Partner
(86) Internationale Anmeldenummer: PCT/EP2022/063671
(87) Internationale Veröffentlichungsnummer: WO 2022/253589

(56) Entgegenhaltungen:
- ARESTOVA ANNA ET AL: "A Service-Oriented Real-Time Communication Scheme for AUTOSAR Adaptive Using OPC UA and Time-Sensitive Networking", SENSORS, vol. 21, no. 7, 27 March 2021 (2021-03-27), pages 2337, XP055892796, DOI: 10.3390/s21072337

## Beschreibung

Die Erfindung betrifft ein Verfahren zum laufzeitbasierten Konfigurieren einer geräteinternen Signalübertragung in einem Steuergerät. Mittels der Signalübertragung tauschen Softwarekomponenten des Steuergeräts zyklisch die Signaldaten von Signalen aus. Das Konfigurieren der Signalübertragung erfolgt in einer Laufzeitumgebung gemäß dem Standard AUTOSAR bei einem Aufstart (Boot-Up, Hochfahren) des Steuergeräts. Die Erfindung umfasst auch ein entsprechend betreibbares Steuergerät sowie ein Kraftfahrzeug mit einem solchen Steuergerät.

AUTOSAR (AUTomotive Open System ARchitecture) ist eine durch das AUTOSAR Konsortium erarbeitete Beschreibung unter anderem einer grundlegenden Softwarearchitektur für Steuergeräte im Bereich der Kraftfahrzeugtechnologie. AUTOSAR sieht Softwaremodule oder Softwarekomponenten vor, die jeweils einzelne Funktionsbestandteile des Steuergeräts realisieren. Um schließlich vollständige Gerätefunktionen bereitzustellen, wirken diese Komponenten miteinander zusammen. Hierzu tauschen die Komponenten Signale aus. Die einzelnen Signaldaten der Signale werden durch eine Laufzeitumgebung oder RTE-Übertragungseinrichtung (RTE - Runtime Environment) zwischen den Komponenten übertragen. Gemäß der AUTOSAR-Kommunikationsstruktur tauschen die Komponenten Signaldaten eines jeweiligen Signals paarweise untereinander aus. Hierzu stellt eine Komponente des Komponentenpaares die Signaldaten bereit (Publisher-Komponente oder Sendekomponente) und die andere der Komponenten des Komponentenpaars liest die Signaldaten ein (Subscriber-Komponente oder Empfangskomponente). Die RTE-Übertragungseinrichtung ist in der Lage, Signale einer Sendekomponente an keine, eine oder mehrere Empfangskomponenten zu übertragen. Eine Komponenten kann also ihre Signaldaten mehreren anderen Komponenten bereitstellen, so dass sich insgesamt eine 1-zu-N-Beziehung bei der Kommunikation ergibt.

Ein Steuergerät (electronic control unit, ECU) kann gleichzeitig eine Vielzahl von Funktionen zur Steuerung und/oder Regelung von technischen Systemen und sonstigen Prozessen (allgemein bezeichnet als "Strecke") ausführen. Hierbei werden in das Prozessorsystem des Steuergeräts wiederholt Messdaten aus Messquellen eingelesen ("Messwerte"), verarbeitet ("interne Signale") und an Aktoren ausgegeben ("Stellwerte"). Die einzelnen Funktionen werden mit technischen Anforderungen beschrieben und in Prozessen ("Funktionsentwicklung"/"Softwareentwicklung") erstellt, getestet und schließlich als modulare Einheiten in Form von eigenständigen "Softwarekomponenten" bereitgestellt, die durch Signalaustausch miteinander interagieren und/oder zusammenwirken. Ebenso existieren übergreifende Anforderungen und ein übergreifender Entwicklungsprozess, durch den die einzelnen Softwarekomponenten zusammen mit "Basissoftware" zu einem Gesamtsystem zusammengesetzt werden ("Softwareintegrationsprozess").

Sowohl im Softwareentwicklungsprozess als auch im Softwareintegrationsprozess werden die Signale in einem Steuergerät beschrieben und deren Verbreitungsweg im Steuergerät definiert. Mittels händischer oder impliziter Konfiguration wird zum späteren Signaltransfer (zur Laufzeit / "Runtime") ein Softwaremodul erstellt, in welchem definiert wird, wann und in welchem Speicherbereich des Steuergerätes die Signaldaten zur Laufzeit abgelegt und gelesen werden. Dieses Softwaremodul enthält zugleich die Implementierung für die von den Funktionsmodulen genutzten Programm-Schnittstellen.

Ein Verfahren zur impliziten Konfiguration dieser Software-Schicht ist das sogenannte Publish / Subscribe-Verfahren "Pub/Sub" (vergleiche die Offenlegungsschrift DE 10 2016 223 540 A1). Hierbei werden Signale mit einer global gültigen Identifikation versehen ("Signal-ID", "Topic", "Pub/Sub-ID" ), damit sie von allen Softwarekomponenten identisch referenziert werden können. Als Bestandteil jeder Softwarekomponente werden darauf aufbauend Listen mit Identifikationen aller benötigten Eingabesignale ("Subscriber-Liste") und aller zur Verfügung gestellter Ausgabesignale ("Publisher-Liste") hinzugefügt. Anhand dieser Listen können die Signalschnittstellen einer Softwarekomponente sehr leicht vollständig beschrieben werden ("Komponentenheader", "Pub/Sub-Header").

Beim Start des Steuergerätes werden aufgrund dieser Beschreibung die Signalverbreitungswege (im Folgenden auch als "Signalwege" bezeichnet) wie folgt automatisch erstellt. Zuerst prüft eine Softwareroutine alle Publish- und Subscribe-Einträge aller Komponenten und gleicht diese miteinander ab. Für jeden Subscribe-Eintrag wird der zugehörige Publish-Eintrag identifiziert und beispielswiese mittels einer Speicherreferenz verknüpft. Zur Systemlaufzeit wird dann jedes Signal aus dem vom referenzierten Produzenten (Softwarekomponente, die das Signaldaten erzeugt = Publisher-Komponente) vorgehaltenen Speicherbereich ("Publish-Puffer", "Ausgabepuffer", "Quelle") zum vom jeweiligen Konsumenten (Softwarekomponente, die die Signaldaten einliest = Subscriber-Komponente) vorgehaltenen Speicherbereich kopiert ("Subscribe-Buffer", "Eingangspuffer", "Senke"). Das Kopieren erfolgt in jedem Ausführungszyklus vor dem Aufruf des Funktionscodes der jeweiligen konsumierenden Softwarekomponente. Dies kann alle 0,1 Millisekunden bis 10 Sekunden stattfinden. Auf einem Steuergerät können sich mehrere Prozessorsysteme ("System on Chip", "SoC", "Rechenknoten") befinden, die eigenständige Betriebssystem- und Basissoftwareinstanzen und jeweils Anteile der Applikationssoftware als Softwarekomponenten ausführen. Ein Knoten kann dabei nicht direkt auf den Speicher eines anderen Knoten zugreifen.

Die Prozessorsysteme können zusätzlich innerhalb des Steuergerätes zum Zweck der gegenseitigen Datenkommunikation mit einem Datennetzwerk, z.B. einem Feldbussystem oder einem paketbasierten Übertragungsnetzwerk (z.B. Ethernet), verbunden sein. Signaldaten werden dabei anhand eines Feldbus- oder Netzwerkprotokolls übertragen. Hierbei werden die Signaldaten in ein Datenpaket eingebettet, dessen Versendung und Empfang in der Regel durch eigenständige Hardwareeinheiten erfolgt, welche asynchron zum Hauptprozessor des jeweiligen Rechenknotens arbeiten. Eine Synchronisation von Übertragungsprozessen und Ausführung der Funktionssoftware ist notwendig. Wenn miteinander verknüpfte Softwarekomponenten auf verschiedenen Knoten des Steuergerätes ausgeführt werden sollen, ist eine Signaldatenübertragung zwischen diesen Knoten erforderlich. In klassischen nicht-Pub/Sub-basierten Systemen erfolgt diese Signalübertragung mit einem Feldbus oder Vernetzungssystem und anhand einer expliziten Konfiguration, die beschreibt, wann welche Übertragung auf welchem Kanal stattfinden muss (sogenannte "K-Matrix"). Im Kontext von Pub/Sub kann aber keine vorab festgelegte K-Matrix angegeben werden, die unabhängig von den Softwarekomponenten gültig ist, weil erst beim Aufstarten (Boot-Up) des Steuergerätes bekannt wird, welche Publisher-Listen und Subscriber-Listen anfallen. Vielmehr resultiert die K-Matrix-Beschreibung aus den Anforderungen einer gegebenen Konstellation von Software-Komponenten auf den Rechenknoten des verteilten Systems im Steuergerät.

Ein Problem des beschriebenen Pub/Sub-Verfahrens ist, dass viele einzelne Signalbeziehungen auftreten (typischerweise um die 15.000 Paarungen), wodurch entsprechend viele Speicherreferenzen vorgehalten sowie zur Laufzeit entsprechend viele Signalübertragungen durchgeführt müssen. Ressourcen in Form von Arbeitsspeicher und Prozessorzeit werden stärker beansprucht, als es ohne Einsatz des Pub/Sub-Verfahrens nötig wäre.

Der Nachteil wird zusätzlich verstärkt, wenn Signale zwischen mehreren Rechenknoten eines Steuergeräts übertragen werden müssen, weil dann neben Speicherreferenz und Kopiervorgang noch erhebliche weitere Ressourcenaufwände entstehen um eine Signaldatenübertragung über ein Netzwerk oder einen Feldbus zu realisieren. Dies sind zusätzlicher Speicher für das Erstellen des Datenpakets, zusätzliche Übertragungszeit für das Versenden und Empfangen des Paketes. Mit dem klassischen Pub/Sub-Verfahren entstehen die zusätzlichen Aufwände proportional zur Anzahl der zu übertragenden Signale.

Die in dieser Beschreibung beschriebene Idee kann beispielsweise als Weiterführung der bereits veröffentlichten Druckschrift DE 10 2016 223 540 A1 genutzt werden. Darin ist beschrieben, wie in einer AUTOSAR RTE Umgebung eines Steuergeräts ein Publish-Subscribe-Verfahren für die Übertragung von Signaldaten zwischen Softwarekomponenten des Steuergeräts angewendet werden kann.

Die Verwendung des Publish-Subscribe-Verfahrens in einer AUTOSAR RTE Umgebung eines CAN-Bussystems ist auch aus der wissenschaftlichen Veröffentlichung von Janitzek et al. (Emil M. Janitzek, Markus P. Ljungblad: "Exploring variation mechanisms in the automotive industry - A case study", 2010, Bachelor-Thesis, URL: https://gupea.ub.gu.se/handle/2077/23469) bekannt.

Aus der DE 101 25 421 A1 ist bekannt, in einem CAN-Bussystem unterschiedliche Signale zu Signalgruppen zusammenzufassen, um deren Signaldaten gleichzeitig in einem gemeinsamen Rahmen ("Frame") im CAN-Bus versenden zu können. Das Einsatzgebiet der Gruppierung ist die Signalübertragung auf Ebene der Vernetzung mehrerer Steuergeräte mit einem Feldbussystem. Das Verfahren nutzt aber zur Gruppenbildung statische lokale Signaleigenschaften, insbesondere die Signalpriorität, die auf jedem der Steuergeräte schon abgelegt sind. Eine dynamische Gruppierung beim Aufstart der Steuergeräte ist nicht möglich.

Des Weiteren ist aus dem Artikel Arestova Anna ET AL: "A Service-Oriented Real-Time Communication Scheme for AUTOSAR Adaptive Using OPC UA and Time-Sensitive Networking", Sensors, Bd. 21, Nr. 7, 27. März 2021 (2021-03-27), Seite 2337, DOI: 10.3390/s21072337 eine Kommunikation zwischen Steuergeräten über das Publish-Subscribe-Verfahren im Kontext von AUTOSAR bekannt.

Die Übertragung von Datenpaketen in AUTOSAR kann mittels des Protokoll SOME/IP erfolgen (Norm AUTOSAR FO Release 1.1.0 2017-03-31, Document ID 696. SOME/IP Protocol Specification). Dieses Protokoll nutzt für die Übertragung zwischen Steuergeräten Datennetzwerke mit den Protokollen TCP (Transmission Control Protocol) und UDP (User Datagram Protocol). Auf der Netzwerk-Ebene müssen durch Bindings mehrere Datenpakete pro UDP-Netzwerkpaket erlaubt sein.

Der Erfindung liegt die Aufgabe zugrunde, in einem Steuergerät eines Kraftfahrzeugs eine AUTOSAR Laufzeitumgebung (RTE - runtime environment) für den Austausch von Signalen zwischen Softwarekomponenten effizient zu implementieren.

Ein Aspekt der erfindungsgemäßen Lösung ist ein Verfahren zum laufzeitbasierten Konfigurieren einer geräteinternen Signalübertragung in einem Steuergerät (ECU - electronic control unit). Das Verfahren kann durch eine Prozessorschaltung des Steuergeräts ausgeführt werden. Es kann also geräteintern ablaufen. In einer Laufzeitumgebung (insbesondere gemäß AUTOSAR) wird hierzu bei einem Aufstart des Steuergeräts (also beim Booten oder Hochfahren und damit laufzeitbasiert), durch Publisher-Komponenten jeweils zumindest eine Publisher-Liste der von ihnen jeweils bereitgestellten Signale und durch Subscriber-Komponenten jeweils zumindest eine Subscriber-Liste der von ihnen benötigten Signale bereitgestellt. Eine jeweilige Publisher-Komponente und Subscriber-Komponente können jeweils als Software-Komponente realisiert oder programmiert sein, die auf einer Prozessorschaltung des Steuergeräts ausgeführt wird. Eine solche Software-Komponente umfasst eine oder mehrere ausführbare Funktionen (Runnable Entities, Runnables). In diesem Dokument wird der Übersichtlichkeit halber beschrieben, dass es eine Publish/Subscribe-Liste pro Software-Komponente gibt, aber die Erfindung umfasst auch den Fall, dass es für die einzelnen Funktionen der Software-Komponente jeweils eine Liste geben kann. Denn ein Modul / eine Software-Komponente kann aus mehreren Funktionen/Runnables bestehen (z.B. 1xInit plus 1x10ms zyklisch plus weitere eventgetriebene). In der Praxis / im Sprachgebrauch wird zwar die zyklische Runnable oft mit der Funktionalität der Komponente gleichgesetzt (eine 1:1-Beziehung Komponente-zu-zyklische-Runnable). Aber jede Funktion/Runnable kann als ein Teilnehmer in der Signalkommunikation fungieren, d.h. jede Funktion/Runnable hat eine eigene Identität (ID) und kann eine eigene Publish- und/oder Subscribe-Liste vorsehen.

Mittels der Signale können diese Software-Komponenten Signaldaten austauschen. Die jeweils aktuellen Signaldaten beschreiben den jeweils aktuellen Abschnitt des Signals. Beispielhafte Signale sind: eine Drehzahl eines Rads des Kraftfahrzeugs, ein Temperaturverlauf über der Zeit, eine Fahrgeschwindigkeit über der Zeit, ein Zustand zumindest eines Geräts eines Kraftfahrzeugs, beispielsweise einer Parkbremse. Ein Signal kann also einen aktuellen Zustand einer Fahrzeugkomponenten (Eingangssignal) und/oder ein Steuersignal für eine Fahrzeugkomponente (Ausgabesignal) und/oder ein Berechnungsergebnis (Verarbeitungssignal) sein.

In dem Steuergerät muss nicht bereits bei dessen Herstellung fest einprogrammiert sein, welche Signaldaten in der Laufzeitumgebung von welcher Publisher-Komponente zu welcher Subscriber-Komponente übertragen werden sollen. Vielmehr erfolgt diese Konfiguration dynamisch bei einem Aufstart oder Hochfahren oder Booten des Steuergeräts in Abhängigkeit von den sich dann ergebenden Publisher-Listen oder Subscriber-Listen.

Bei der Erfindung soll dabei zur Steigerung der Effizienz verhindert werden, dass jedes Signal individuell von einer Publisher-Komponente zu einer Subscriber-Komponente mittels der Laufzeitumgebung übertragen werden muss. Wie bereits beschrieben, können sich hieraus typischerweise 15 000 Komponentenpaare ergeben, was einen entsprechenden Overhead bei der Signalübertragung verursachen würde.

Für jede Subscriber-Komponente wird deshalb für die von ihr benötigten Signale ermittelt, welchen Signalweg von einer der Publisher-Komponenten zur Subscriber-Komponente das jeweilige benötigte Signal bei gegebenen Publisher-Listen durch das Steuergerät nehmen muss. Aus den benötigten Signalen wird für solche der benötigten Signale, für die jeweils ein identischer Signalweg erkannt wird, eine Signalgruppe definiert, indem für die Signale der jeweiligen Signalgruppe ein gemeinsamer Übertragungsbefehl in der Laufzeitumgebung hinterlegt wird. Durch den Übertragungsbefehl werden also die jeweils aktuellen Signaldaten mehrerer Signale derselben Signalgruppe gemeinsam übertragen (beispielswiese bei zyklischer Übertragung zu periodischen Übertragungszeitpunkten z.B. im Bereich von alle 100µs bis 30s). Beim zyklischen Ausführen der hinterlegten Übertragungsbefehle der Subscriber-Komponenten durch die Laufzeitumgebung werden somit aktuelle Signaldaten der Signale einer jeweiligen Signalgruppe jeweils als ein gemeinsames Datenpaket von der jeweiligen Publisher-Komponente zu der jeweiligen Subscriber-Komponente der Signalgruppe übertragen. Bezieht also eine Subscriber-Komponente von derselben Publisher-Komponente mehrere Signale, so wird dies identifiziert oder erkannt, und die Signaldaten dieser Signale, die denselben Signalweg aufweisen, werden bei jedem Übertragungszyklus oder zu jedem Übertragungszeitpunkt als Datenpaket einer Signalgruppe gemeinsam übertragen.

Der Übertragungsweg eines Signals ist eindeutig gegeben durch seine Publisher-Komponente als Quelle (erkennbar aus dem Publish-Eintrag einer Publisher Liste) und die Menge seiner Subscriber-Komponenten als Senken (erkennbar aus den Subscriber-Einträgen der Subscriber-Listen). Durch Bestimmung aller Signalverbreitungswege und anschließenden Abgleich für alle Signale können die Signalgruppen ermittelt werden.

Durch die Erfindung ergibt sich der Vorteil, dass für die Übertragung mehrerer Signale, die denselben Signalweg aufweisen und daher eine Signalgruppe darstellen, nur ein einzelner Übertragungsbefehl in der Laufzeitumgebung ausreichen kann, anstelle jeweils eines individuellen Übertragungsbefehls pro Signal. Ein solcher Übertragungsbefehl kann beispielsweise ein Kopierbefehl sein, um die aktuellen Signaldaten mehrere Signale der Signalgruppe, beispielsweise die aktuelle Drehzahl eines Rades und eine aktuelle Temperatur eines Bremssattels und ein Bremsdruck, als gemeinsames Datenpaket aus einem Ausgabepuffer der entsprechenden Publisher-Komponente in einen Eingangspuffer der empfangenden Subscriber-Komponente zu kopieren. Der Kopierbefehl kann beispielsweise in einem Datenspeicher eine Adresse eines Anfangs oder Beginns des Ausgabepuffers, in dem sich das Datenpaket befindet, und eine Größe des Ausgabepuffers (Anzahl an zu kopierenden Bytes des Datenpakets) als Parameter nutzen. Ausgehend von der Anfangsadresse und der Größe des Ausgabepuffers erfolgt dann mittels eines Kopiervorgangs oder allgemein eines Übertragungsvorgangs die Übertragung des Datenpakets mit den Signaldaten der gesamten Signalgruppe. Eine solche Übertragung kann beispielsweise mittels DMA (Direct Memory Access) erfolgen. Durch das Zusammenfassen von Signalen desselben Signalwegs in einer Signalgruppe ergeben sich somit weniger Übertragungsbefehle, beispielsweise weniger Kopierbefehle, so dass auch entsprechend weniger Overhead zum Einleiten und/oder Verwalten der Übertragungsbefehle und/oder Übertragungsvorgänge in dem Steuergerät anfällt. Dies steigert die Effizienz der Signalübertragung zwischen den Software-Komponenten.

Die Erfindung umfasst, dass in dem Steuergerät mehrere Rechenknoten betrieben werden, die über ein Datennetzwerk verbunden sind. Eine andere Bezeichnung für Rechenknoten ist auch Computation Node oder einfach nur Node. Beispiele für einen solchen Rechenknoten sind jeweils ein Mikroprozessor und ein SoC (System-on-Chip). Beispiele für ein Datennetzwerk innerhalb eines Steuergeräts sind jeweils ein Bussystem und ein Ethernet-Netzwerk. Ein Beispiel für ein Bussystem ist ein PCle-Systembus. Das Datennetzwerk kann insbesondere verschieden sein von einem externen Datennetzwerk, an welches das Steuergerät in dem Kraftfahrzeug angeschlossen sein kann.

Zwischen zwei Rechenknoten können ebenfalls Signalwege verlaufen, wenn eine Subscriber-Komponente auf einem anderen Rechenknoten ausgeführt wird als die Publisher-Komponente, von welcher Signale benötigt werden. Allerdings können die Signalwege nicht nur einer Signalgruppe, sondern mehrerer Signalgruppen zwischen den Rechenknoten verlaufen. Es werden deshalb mehrere Signalwege identifiziert, die vom selben Rechenknoten als Quellknoten zum selben anderen Rechenknoten als Zielknoten führen. Es kann sich um die Signalwege einer oder mehrerer Signalgruppe handeln. Für diese identifizierten Signalwege wird im Quellknoten ein Sammelpuffer und im Zielknoten ein Verteilerpuffer bereitgestellt und die jeweiligen aktuellen Signaldaten für die mehreren identifizierten Signalwege werden in dem Sammelpuffer gesammelt und in einem gemeinsamen Netzwerkpaket zum Verteilerpuffer übertragen und dort vom Verteilerpuffer aus zu der zumindest einen durch die identifizierten Signalwege bestimmten Subscriber-Komponente weiter übertragen. Ein Quellknoten und ein Zielknoten stellen also jeweils einen Rechenknoten dar, wobei auf einem Quellknoten zumindest eine Publisher-Komponente für zumindest einen der identifizierten Signalwege und auf dem Zielknoten zumindest eine Subscriber-Komponente zum Empfangen zumindest eines der Signalwege aufweist oder dort ausgeführt wird. Die Sammelpuffer und die Verteilerpuffer können jeweils für eine einzelne Signalgruppe oder auch für mehrere Signalgruppen vorgesehen sein, falls diese vom selben Quellknoten zum selben Zielknoten übertragen werden müssen. Es können also die Datenpakete mehrerer Signalgruppen in einem Sammelpuffer gesammelt werden und gemeinsam als Netzwerkpaket über das Datennetzwerk in den Verteilerpuffer desselben Zielknotens übertragen werden. Ein Sammelpuffer und ein Verteilerpuffer können jeweils beispielsweise in einem RAM des jeweiligen Rechenknotens angelegt oder betrieben werden. Aus dem Verteilerpuffer des Zielknotens heraus können dann wieder die Datenpakete der einzelnen Signalgruppen getrennt voneinander zu der jeweiligen Subscriber-Komponente übertragen werden. Somit kann also bei der Übertragung über das Datennetzwerk eine Zusammenfassung von Signaldaten in ein gemeinsames Netzwerkpaket erfolgen, was zu einer Reduzierung des Overheads beim Verwalten oder Organisieren des Netzwerkverkehrs auf dem Datennetzwerk führt und damit die Übertragung effizienter als die Übertragung einzelner Datenpakete macht. Das Ermitteln einer einzelnen Signalgruppe, also das Erkennen gemeinsamer Signalwege zwischen jeweils einer Publisher-Komponente und einer Subscriber-Komponente, kann mit einem einfachen Softwarecode realisiert werden, was Rechenressourcen in dem Steuergerät spart und den Aufstart verkürzt.

Die vorliegende Anmeldung beschreibt auch Weiterbildungen, durch die sich zusätzlichen Vorteile ergeben.

Eine Weiterbildung umfasst hierzu, dass zum Ermitteln der Signalgruppen zu jedem der Signalwege ein Signalwegetag als ein ein Datenwort konstruiert wird (Datenwort = Bytefolge fest vorgegebener Länge), das in einem ersten Bitfeld die Publisher-Komponente, in einem zweiten Bitfeld die jeweiligen Rechenknoten, auf welchen die Subscriber-Komponenten ausgeführt werden, in einem dritten Bitfeld die Subscriber-Komponenten angibt. Im zweiten Bitfeld kann auch ein Rechenknoten, auf welchem die Publisher-Komponente ausgeführt wird, angegeben sein. Die Signalwegetags aller Signalwege werden in einem Datenspeicher mittels eines Sortieralgorithmus' sortiert und in dem Datenspeicher werden dann Abschnitte gleicher Signalwegetags oder Abschnitte, in denen ein vorbestimmter Teil der Signalwegetags übereinstimmt, erkannt, durch welche dann jeweils eine der Signalgruppen definiert ist. Jedes Signalwegetag weist drei Abschnitte oder Bitfelder auf. Das sich ergebende Datenwort kann auch als ein Integer interpretiert werden, so dass sich die Datenworte mittels eines Sortieralgorithmus in an sich bekannter Weise z.B. Bespiele nach dem Kriterium "größer als" und/oder "kleiner als" sortieren lassen. Ein Beispiel für einen solchen Sortieralgorithmus ist Quick-Sort. Durch Definieren des Datenworts und Sortieren der sich ergebenden Datenwörter kann in automatisierter Weise durch die Prozessorschaltung des Steuergeräts detektiert werden, welche Signalgruppen sich ergeben. Bevorzugt haben die Bitfelder eine konstante oder fest vorgegebene Größe, so dass bei der Sortierung die Felder in Abhängigkeit von ihrer Position im Datenwort den gleichen Stellenwert oder die gleiche Gewichtung enthalten. Eine Weiterbildung umfasst hierzu, dass zum Bilden zumindest einer der Bitfelder ein Hash-Algorithmus verwendet wird, durch welchen unabhängig von der Anzahl der Eingaben (Input) immer eine Ausgabe mit der gleichen Länge erzeugt wird. Ein solcher Hash-Algorithmus kann beispielsweise der XOR-Hash sein. Mittels eines Hash-Algorithmus kann unabhängig von einer Länge oder einer Anzahl Bytes des Eingabewerts als Input sichergestellt werden, dass die Ausgabe, das heißt das sich ergebende Bitfeld, gleich lang ist oder stets die gleiche Länge aufweist. Das "Hash"-Verfahren wird insbesondere für das Verschmelzen einzelner Informationen von mehreren Subscriber-Komponenten/Runnables genutzt. Als "Information" kann ein ID-"Hash" einer Softwarekomponente/Runnable berücksichtig werden (jede Runnable hat eine ID, die sich aus der Knotennummer und der Startadresse der Funktion im ROM ergeben kann). Die Informationen von mehreren Subscriber-Komponenten für das Signal können zusammenaddiert werden (z.B. bitweise XOR oder Addition (mod 2^15) oder ein anderer Algorithmus), um eine Kennung für genau diese Menge an Subscriber-Komponenten zu ermitteln, d.h. Mengen-ID ist XOR-Summe aller IDs der Mengenelemente. Die anderen Bitfelder brauchen nicht unbedingt mit einem derartigen Hashverfahren behandelt werden, sondern können anders ermittelt werden (die Knotenmaske / das zweite Bitfeld kann z.B. mit bitweise-OR aggregiert (Bitmaske) werden und/oder das Publisher-Tag / die dritte Bitmaske kann alleine stehen bleiben).So können in Abhängigkeit von den Informationen oder den Daten über Publisher-Komponenten das erste Bitfeld stets mittels des Hash-Algorithmus gleich lang gewählt oder eingestellt werden. Selbiges gilt für das zweite Bitfeld und das dritte Bitfeld und weitere Bitfelder.

Sobald die Signalgruppen bekannt sind, muss die Laufzeitumgebung auch automatisiert eingerichtet oder konfiguriert werden können. Anders als im Fall einer Konfiguration bei einer Herstellung im Labor ist aber in einem Steuergerät, das bereits in einem Kraftfahrzeug betrieben wird, beim Aufstarten zunächst nicht klar, wie viel Speicher für wie viele Signalgruppen allokiert werden muss und wie groß die jeweilige Signalgruppe ist. Dies ergibt sich erst durch das beschriebene Überprüfen oder Auswerten der Publisher-Listen und Subscriber-Listen. Eine Weiterbildung umfasst als Lösung, dass für jede identifizierte Signalgruppe jeweils in einem Datenspeicher ein Ausgabepuffer für die zugehörige Publisher-Komponente und ein Eingangspuffer für die zugehörige Subscriber-Komponente allokiert werden und die Publisher-Komponente zyklisch jeweilige aktuelle Signaldaten der Signalgruppe in den Ausgabepuffer schreibt und somit das jeweils aktuelle Datenpaket in dem Ausgabepuffer erzeugt. Die Laufzeitumgebung überträgt das Datenpaket in den Eingangspuffer der Subscriber-Komponente und die Subscriber-Komponente kann aus ihrem Eingangspuffer die Signaldaten des Datenpakets einlesen, d.h. sie bekommt die Signaldaten zum Einlesen bereitgestellt (ob sie die Signaldaten tatsächlichen einliest, kann z.B. von einem inneren Zustand der Subscriber-Komponente abhängen). Somit kann auch die Speicherverwaltung für das Übertragen von Signaldaten aus den jeweiligen Ausgabepuffern der Publisher-Komponenten in die Eingangspuffer der Subscriber-Komponenten automatisiert werden.

Zwei mögliche Weiterbildungen betreffen die Strukturierung oder Aufteilung der Datenpakete, in denen die jeweils aktuellen Signaldaten einer Signalgruppe übertragen werden.

Eine Weiterbildung umfasst, dass bei zumindest einer Signalgruppe in deren Datenpaketen die Signaldaten des jeweiligen Signals der Signalgruppe stets an demselben Offset in dem Datenpaket und ohne Kennzeichnung enthalten sind und der Zugriff auf die Signaldaten durch die empfangende Subscriber-Komponente für jedes Signal der Signalgruppe erfolgt, indem in dem Datenpaket ausgehend von dem jeweiligen Offset eine vorbestimmte Anzahl an Bytes gelesen wird und diese gelesenen Bytes als die aktuellen Signaldaten des jeweiligen Signals verwendet oder verfügbar gemacht werden. Für jedes Signal ist also festgelegt, bei welchem Offset dessen Signaldaten in einem Datenpaket gespeichert sind. So kann beispielsweise für das Signal "Drehzahl" am Offset 16 Bytes im Datenpaket gespeichert sein, und es kann vorgesehen sein, dass für dessen Signaldaten 2 Bytes reserviert sind oder vorgesehen sind. Da der Offset und die Anzahl der zu lesenden Bytes für die Signaldaten des Signals bekannt sind, müssen die Bytes der Signaldaten unterschiedlicher Signale nicht durch eine Kennzeichnung getrennt werden, da beim Einlesen der Signaldaten bekannt ist, bei welchem Offset wie viele Bytes gelesen werden müssen. Die Datenpakete sind damit kompakt. Dies kann in einer Beschreibung der Signalgruppe hinterlegt oder gespeichert sein, die beim Erzeugen der Signalgruppe automatisiert, bereitgestellt oder erzeugt werden kann.

Eine Weiterbildung umfasst dagegen, dass bei zumindest einer Signalgruppe in den Datenpaketen die jeweiligen Signaldaten der Signale der Signalgruppe durch ein jeweiliges signalspezifisches Präfix und/oder Postfix abgegrenzt sind und die empfangende Subscriber-Komponente in dem empfangenen Datenpaket die jeweiligen Signaldaten zumindest eines Signals durch Suchen des jeweiligen Präfix und/oder Postfix findet und die angrenzenden Signaldaten einliest. Ein weiteres denkbares Vorgehen wäre, dass man ein Paketdatenformat beschreibt, indem Signaldaten in ein Verzeichnis eingebettet sind. Per Durchsuchen des Verzeichnisses im jeweiligen Datenpaket oder Signal-Buffer käme man zum passenden Offset, wo dann die Signaldaten lägen. Somit können die Signaldaten eines spezifischen Signals von Datenpaket zu Datenpaket an unterschiedlichen Positionen oder Offsets in dem Datenpaket gespeichert sein, da durch Identifizieren oder Suchen eines Präfix und/oder Postfix die Position der Signaldaten dieses Signals im Datenpaket detektiert werden kann. Ein Präfix und ein Postfix können jeweils beispielsweise ein vorbestimmtes Bytemuster sein. Vorteil von deren Verwendung ist, dass die Reihenfolge der Signale in dem Datenpaket änderbar oder variierbar ist. Insbesondere müssen nicht zu jedem Signal in jedem Datenpaket Signaldaten vorhanden sein. Somit kann ein Datenpaket in Abhängigkeit davon, zu welchem Signal Signaldaten verfügbar sind, entsprechend nur solche Signaldaten enthalten, die aktualisiert wurden und verfügbar sind.

Ein Aspekt der erfindungsgemäßen Lösung ist ein Steuergerät mit einer Prozessorschaltung mit mehreren Rechenknoten, wobei die Prozessorschaltung dazu eingerichtet ist, eine Ausführungsform des erfindungsgemäßen Verfahrens durchzuführen. Das Steuergerät kann beispielsweise die Prozessorschaltung in einem einzelnen Gerätegehäuse bereitstellen. Das Steuergerät mit seinem Gerätegehäuse kann an einem Kommunikationsnetzwerk des Kraftfahrzeugs angeschlossen sein, beispielsweise einem CAN-Bus oder einem Ethernet-Netzwerk.

Die Prozessorschaltung kann eine Datenverarbeitungsvorrichtung oder eine Prozessoreinrichtung darstellen. Die Prozessorschaltung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) als jeweiligen Rechenknoten aufweisen. Bevorzugt ist einer oder sind zwei oder alle Rechenknoten jeweils durch ein SoC (System on Chip) realisiert. Des Weiteren kann die Prozessorschaltung Programmcode aufweisen, der dazu eingerichtet ist, bei Ausführen durch die Prozessorschaltung die Ausführungsform des erfindungsgemäßen Verfahrens durchzuführen. Der Programmcode kann in einem Datenspeicher der Prozessorschaltung gespeichert sein.

Das Steuergerät umfasst, dass die Prozessorschaltung mehrere Rechenknoten umfasst, von denen einer oder mehrere oder jeder ein System-on-Chip, SoC, ist und diese Rechenknoten über einen Systembus und/oder ein Ethernet-Netzwerk für das Austauschen von Signalen verbunden sind. In dem Steuergerät selbst kann also ein separates Datennetzwerk vorgesehen sein, das durch einen Systembus (beispielsweise PCle oder HSSL oder AMBA/AXI) oder ein Ethernet-Netzwerk gebildet sein kann. Besonders bevorzugt ist bei dieser Weiterbildung, dass die beschriebenen Sammelpuffer und Verteilerpuffer bereitgestellt sind oder betrieben werden.

Ein Aspekt der erfindungsgemäßen Lösung ist ein Kraftfahrzeug mit einer Ausführungsform des erfindungsgemäßen Steuergeräts. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung ist in den unabhängigen Ansprüchen definiert. Abhängige Ansprüche beschreiben mögliche Weiterbildungen.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs; und
- Fig. 2: eine schematische Darstellung eines Steuergeräts des Kraftfahrzeugs beim Ausführen einer Ausführungsform des erfindungsgemäßen Verfahrens.

In den Figuren bezeichnen gleiche Bezugszeichen jeweils funktionsgleiche Elemente.

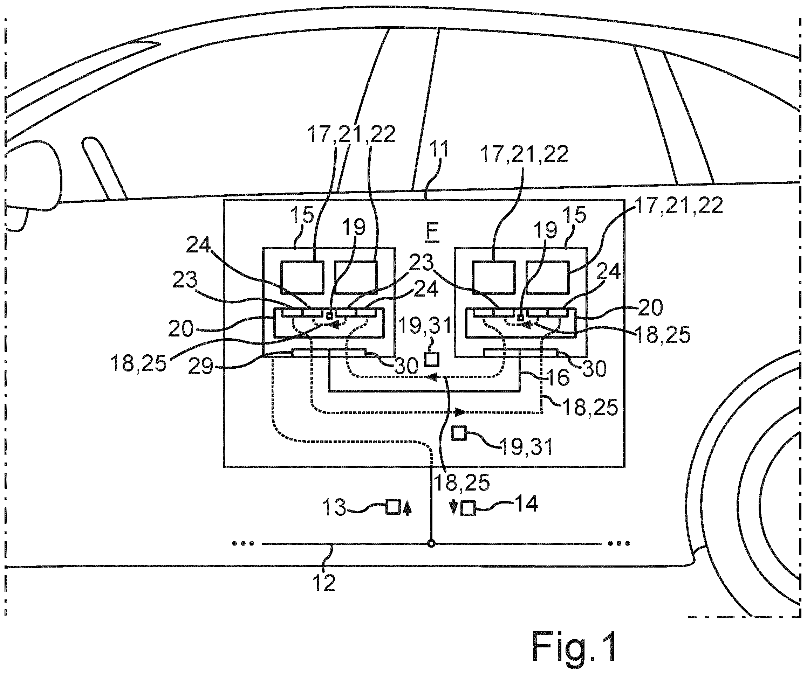

Fig. 1 zeigt ein Kraftfahrzeug 10, bei dem es sich beispielsweise um einen Personenkraftwagen oder Lastkraftwagen, handeln kann. In dem Kraftfahrzeug 10 kann zumindest ein Steuergerät 11 bereitgestellt sein, um in dem Kraftfahrzeug 10 eine Fahrzeugfunktion F bereitzustellen, beispielsweise eine Fahrerassistenzfunktion, wie beispielsweise ein Abstandsregelautomat und/oder einen Spurhalteassistenten. Das Steuergerät 11 kann in dem Kraftfahrzeug 10 an ein Kommunikationsnetzwerk des Kraftfahrzeugs 10 angeschlossen sein, um beispielsweise Sensordaten 13 zu empfangen und/oder Steuerbefehle 14 an zumindest einen Aktuator des Kraftfahrzeug 10 auszusenden. Durch die Fahrzeugfunktion F können anhand der Sensordaten 13 die Steuerbefehle 14 erzeugt werden, um hierdurch die Fahrzeugfunktion F zu bilden. Das Steuergerät 11 kann selbst zumindest einen Sensor und/oder zumindest einen Aktuator aufweisen, um hierdurch die Fahrzeugfunktion F zu realisieren.

Zum Bereitstellen der Fahrzeugfunktion F kann in dem Steuergerät 11 zumindest ein Rechenknoten 15 bereitgestellt sein, wobei in dem Beispiel von Fig. 1 beispielhaft zwei Rechenknoten 15 gezeigt sind. Ein Rechenknoten 15 kann beispielsweise ein Mikroprozessor oder ein SoC sein, um nur Beispiele zu nennen. Die Rechenknoten 15 können untereinander durch ein Datennetzwerk 16 verbunden sein, das sich von dem Kommunikationsnetzwerk 12 unterscheiden kann. Das Datennetzwerk 16 kann beispielsweise auf einem Systembus, beispielsweise PCle oder Ethernet beruhen. In jedem Rechenknoten 15 können Software-Komponenten 17 ausgeführt werden. Die Software-Komponenten 17 können hierzu auf einem oder mehreren Prozessorkernen des Rechenknotens 15 ausgeführt werden. Die Software-Komponenten 17 können Bestandteil der Fahrzeugfunktion F sein. Beispielsweise können durch eine oder mehrere Software-Komponenten 17 die Sensordaten 13 entsprechend der Fahrzeugfunktion F verarbeitet werden und/oder die Steuerbefehle 14 entsprechend der Fahrzeugfunktion F erzeugt werden. Damit die Software-Komponenten 17 zusammenwirken können, können die Software-Komponenten 17 untereinander Signale 18 austauschen. Die Signale 18 können digitale Signale sein, die abschnittsweise oder stückweise als jeweilige aktuelle Signaldaten 19 in einer zyklischen oder periodischen oder ereignisgesteuerten Signalübertragung durch eine Laufzeitumgebung 20 auf dem jeweiligen Rechenknoten 15 zwischen den Software-Komponenten 17 übertragen werden können. Eine Software-Komponente 17, die Signaldaten bereitstellt, stellt dabei eine Publisher-Komponente 21 dar, und eine Software-Komponente 17, die Signaldaten 19 empfängt, stellt eine Subscriber-Komponente dar. Jede Software-Komponente 17 kann sowohl Publisher-Komponente 21 als auch Subscriber-Komponente 22 sein. Zum Ausgeben der Signaldaten kann eine Publisher-Komponente 21 ihre auszugebenden aktuellen Signaldaten 19 in einen Ausgabepuffer 23 ausgeben, zum Empfangen von aktuellen Signaldaten kann eine Subscriber-Komponente die Signaldaten aus einem Eingangspuffer 24 empfangen. Der Übersichtlichkeit halber ist jeweils nur einer dieser Puffer mit einem Bezugszeichen versehen.

Das Übertragen von Signaldaten 19 von dem jeweiligen Ausgabepuffer 23 zum Eingangspuffer 24 kann durch die Laufzeitumgebung 20 in Abhängigkeit von einem entsprechenden Übertragungsbefehl ausgeführt werden, wobei die Laufzeitumgebung 20 alle vorhandenen Übertragungsbefehle, beispielsweise zyklisch oder ereignisgesteuert, wiederholt ausführen kann. Welches Signal von welcher Publisher-Komponente 21 zu welcher Subscriber-Komponente 22 zu übertragen ist, kann in der beschriebenen Weise durch Publisher-Listen und Subscriber-Listen ermittelt werden. Aus diesen ergibt sich dann der jeweilige Signalweg 25 des jeweiligen Signals 18 von einer spezifischen Publisher-Komponente 21 zu einer spezifischen Subscriber-Komponente 22. Führen mehrere Signalwege 25 von derselben Publisher-Komponente 21 zu derselben Subscriber-Komponente 22, so können die jeweiligen Signaldaten 19 dieser Signale 18 mit demselben Signalweg 25 gruppiert werden. Signalwege 25, die von derselben Publisher-Komponente 21 zur selben Subscriber-Komponente 22 führen, stellen jeweils eine Signalgruppe G dar, die für Gruppierung 26 zugrunde gelegt werden kann.

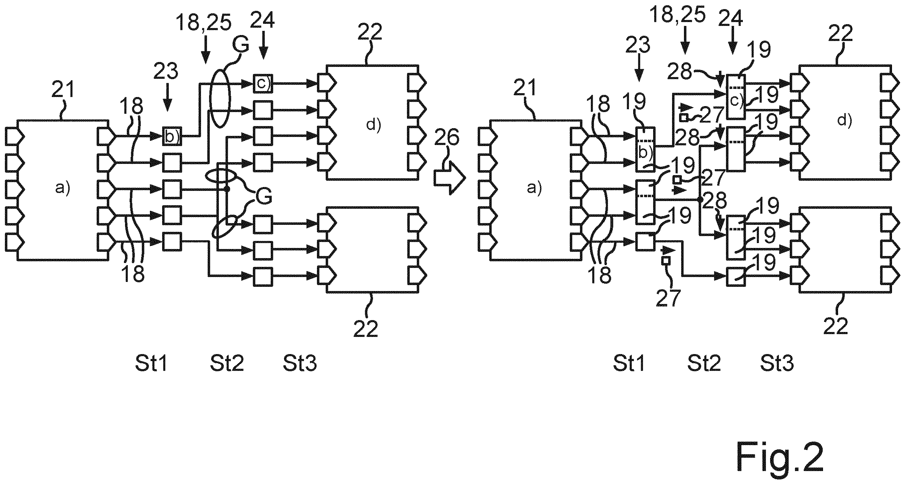

Fig. 2 veranschaulicht den Effekt der Gruppierung von Signalen. Auf der linken Seite ist eine Signalübertragung ohne Gruppierung gezeigt, und nach einer Gruppierung 26 ergibt sich die Signalübertragung, wie sie auf der rechten Seite dargestellt ist, wie eine Publisher-Komponente 21 jedes ihrer Signale 18 in einem einzelnen getrennten Ausgabepuffer 23 beschreibt, von dem aus dann ein Signalweg 25 zu einem entsprechenden Eingangspuffer 24 einer jeweiligen Subscriber-Komponente 22 führt. Das Übertragen vom Ausgabepuffer 23 in den korrespondierenden Eingangspuffer 24 kann durch die Laufzeitumgebung 20 erfolgen, die beispielsweise durch ein Betriebssystem des jeweiligen Rechenknotens 15 bereitgestellt sein kann. Dargestellt ist, dass sich eine entsprechende Vielzahl an Signalwegen 25 ergibt, für die jeweils eine getrennte Übertragung der Signaldaten 19 notwendig ist, was für jeden dieser Übertragungsvorgänge einen entsprechenden Overhead verursacht.

Nach der Gruppierung 26 können für die Publisher-Komponente 21 Ausgabepuffer 23 bereitgestellt sein, in denen die Signaldaten 19 mehrerer Signale 18 zusammengefasst sind. Entsprechend kann entlang oder für den Signalweg 25 der gesamte Ausgabepuffer 23 mit den Signaldaten 19 mehrerer Signale 18 als gemeinsames Datenpaket 27 übertragen werden. Der jeweilige Eingangspuffer 24 kann entsprechend ausgestaltet oder angeordnet sein, so dass das Datenpaket 27 entsprechend auch in dem Eingangspuffer 24 der jeweiligen Subscriber-Komponente 22 geschrieben oder abgelegt werden kann, so dass dort ebenfalls gemeinsam die Signaldaten 19 mehrerer Signale 18 abgelegt oder gespeichert sind. Die Signaldaten 19 können den Signalen 18 beispielsweise dadurch zugeordnet werden, dass sie an einem festen Offset 28 innerhalb des Datenpakets 27 und damit des Eingangspuffers 24 abgelegt oder gespeichert sind. Es können Signaldaten 19 auch mit einem Präfix oder einem Postfix versehen werden, wodurch sie in dem Eingangspuffer 24 durch eine Suche nach dem Präfix und/oder Postfix erkannt oder identifiziert werden können. Fig. 2 veranschaulicht, wie nach der Gruppierung 26 die Zahl der gruppierten Signalwege 25 geringer ist als vor der Gruppierung 26.

Fig. 1 veranschaulicht des Weiteren, dass auch Signaldaten 19 zwischen Rechenknoten 15 über das Datennetzwerk 16 übertragen werden können. Hierbei lassen sich sogar die Datenpakete 27 mehrerer Signalgruppen G zusammenfassen.

Hierzu können in dem jeweiligen Rechenknoten 15 ein Sammelpuffer 29 zum Sammeln oder Zusammentragen von Datenpaketen 27 oder ein Verteilerpuffer 30 zum Verteilen der empfangenen Datenpakete 27 bereitgestellt sein. Die in einem Sammelpuffer 29 gesammelten Datenpakete können dann als Netzwerkpaket 31 über das Datennetzwerk 16 zwischen dem Netzwerkkomponenten 15 übertragen werden. Vom Verteilerpuffer 30 aus können dann die Datenpakete aus dem Netzwerkpaket 31 wieder in der im Zusammenhang mit Fig. 2 beschriebenen Weise auf die Eingangspuffer 24 der Subscriber-Komponenten aufgeteilt oder weitergeleitet werden.

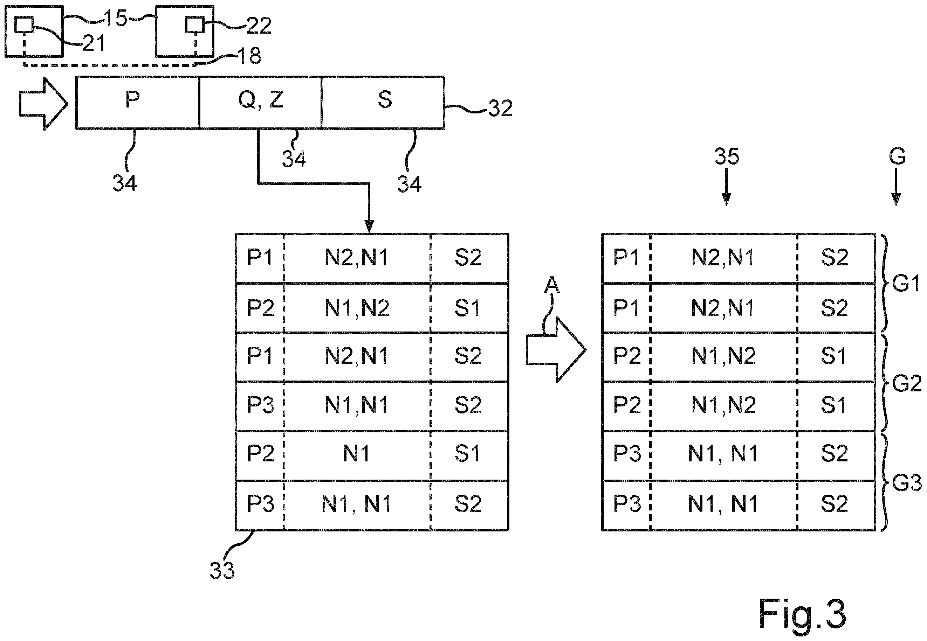

Fig. 3 veranschaulicht, wie bei einem Start oder Booten des Steuergeräts 11 die Signalgruppen G automatisiert dynamisch ermittelt werden können, das heißt bei einer Veränderung der verfügbaren oder vorhandenen Subscriber-Komponenten und/oder Publisher-Komponenten, kann die Gruppierung 26 (siehe Fig. 2) erneut durchgeführt werden.

Fig. 3 zeigt zur Veranschaulichung noch einmal zwei Rechenknoten 15 mit darin ausgeführten Publisher-Komponenten 21 und einer Subscriber-Komponente 22. Jede Software-Komponente und damit jede Publisher-Komponente 21 und jede Subscriber-Komponente 22 können durch eine eindeutige und einzigartige ID identifiziert sein, so dass sich eine Provider-ID P (P1, P2, P3) und eine Subscriber-ID S (S1, S2, S3) ergeben, die in einem Signalwegetag 32 in ein jeweiliges Bitfeld 34 eingetragen werden können. Zudem kann angegeben werden, von welchem Rechenknoten 15 als Quellknoten Q zu welchem Rechenknoten 15 als Zielknoten Z ein Signal 18 übertragen werden soll. Dies kann ebenfalls in ein Bitfeld 34 eingetragen werden. Der Signalweg des Signals 18 ergibt sich dabei durch die Gegenüberstellung der bereits beschriebenen Publisher-Listen und Subscriber-Listen, wie es für das Publish/Subscribe-Verfahren bekannt ist. Die sich so für alle Signalwege ergebenden Signalwegetags können in einer Liste 33 in einem Datenspeicher beispielsweise eines der Rechenknoten 15 abgelegt werden. Sodann kann ein Sortieralgorithmus A die Signalwegetags 32 in der Liste 33 sortieren, woraus sich eine Liste 35 der sortierten Signalwegetags 32 ergeben. Es können nun Abschnitte G1, G2, G3 identifiziert werden, welche sich durch eine Übereinstimmung der Signalwegetags 32 oder eines vorgegebenen Teils der Signalwegetags 32 in der sortierten Liste 35 ergeben. Jeder dieser Abschnitte G1, G2, G3 entspricht dann einer Signalgruppe G. Zu dem jedem Signalwegetag 32 kann gespeichert sein, zu welchem Signal 18 er gehört. Entsprechend kann dann vorgesehen sein, für das jeweilige Signal den Ausgabepuffer 23 und den Eingangspuffer 24 (siehe Fig. 2) gemeinsam mit den übrigen Signalen derselben Signalgruppe G zu allokieren, so dass sich die in Fig. 2 auf der rechten Seite gezeigten Ausgabepuffer 23 und Eingangspuffer 24 für Signaldaten mehrere Signale 18 ergeben.

Anhand der (im Beispiel mittleren) zweiten Bitgruppe 34 für die Quellknoten Q und die Zielknoten Z können auch mehrere Signalwege identifiziert werden, die vom selben Rechenknoten als Quellknoten Q zum selben anderen Rechenknoten als Zielknoten Z führen, selbst wenn sie zu unterschiedlichen Signalgruppen G gehören.

Die vorgeschlagene Lösung besteht somit darin, Signale 18, welche in gleicher Art und Weise kopiert oder übertragen werden (gleicher Signalweg oder "Signalverbreitungsweg"), in eine Gruppe zusammenzufassen (Signalgruppe G), welche dann anstatt der Einzelsignale kopiert oder auf sonstige Art und Weise verbreitet wird. Auf diese Weise werden Ressourcen und Aufwände nur für die Beschreibung und Übertragung von wenigen Signalgruppen G benötigt, anstatt für viele einzelne Signale. Die Ressourceneinsparung ist umso größer, je mehr Signale 18 gemeinsame Übertragungswege oder Signalwege haben. Der Übertragungsweg eines Signals 18 ist eindeutig gegeben durch seine Publisher-Komponente als Quelle (erkennbar aus dem Publish-Eintrag einer Publisher Liste) und die Menge seiner Subscriber-Komponenten als Senken (erkennbar aus den Subscriber-Einträgen der Subscriber-Listen). Durch Bestimmung aller Signalverbreitungswege und anschließenden Abgleich für alle Signale können die Signalgruppen G ermittelt werden. Anschließend können Produzenten/Konsumenten-Beziehungen bzw. Referenzen auf Basis der Signalgruppen G erstellt werden. Zur Systemlaufzeit reichen diese wenigen Informationen aus, um eine Übertragung für die gesamte Signalgruppe G durchzuführen.

Dies kann auf eine zweistufige Signalgruppierung zum Reduzierung von Netzwerkoverhead in einem Datennetzwerk erweitert werden. Eine weitergehende Maßnahme ist hierfür die weitere Zusammenfassung von Signalgruppen G, die in gleicher Weise zwischen den Knoten (Rechenknoten 15) des Steuergerätes 11 übertragen werden müssen. D.h. Signalgruppen G, welche zur selben Zeit und zur selben Menge an Zielknoten Z übertragen werden, können in größeren Gruppen zusammengefasst werden. Hiermit wird der Ressourcenaufwand zur Beschreibung und zum Versenden von Netzwerkpaketen 31 weiter reduziert.

Fig. 2 zeigt hierzu auf den linken Seite den Ablauf der Signaldatenübertragung für den Fall, dass diese auf Basis einzelner Signale erfolgt.
(St1) Eine produzierende Funktion der Softwarekomponente a) schreibt Signalausgangsdaten in die Speicherbereiche b) des Publish-Buffers
(St2) Das Runtime-Softwaremodul überträgt Signaldaten von den Publish-Buffem b) des Produzenten in den Subscribe-Buffer c) des Konsumenten. Dies erfolgt in einzelnen Kopier- bzw. Übertragungsschritten (und ist ineffizient)
(St3) Eine konsumierende Funktion der Softwarekomponente d) liest Eingangssignaldaten aus den Speicherbereichen c) des Subscribe-Buffers.

Fig. 2 zeigt auf der rechten Seite dem Effekt der Gruppierung 26 am gleichen Vorgang, mit gruppierten Signalen. Der Schritt St2 ist anders: Das Runtime-Softwaremodul überträgt Signalgruppendaten von b) nach c). Im Vergleich zu vorher ist die Anzahl der Übertragungsschritte (und somit der Ressourcenaufwand) geringer.

Während der Auflösung von Signalbeziehungen aus dem Publish/Subscribe-Listen werden bevorzugt für jedes auftretende Signal folgende Informationen gesammelt
a) die produzierende Softwarekomponente bzw. Funktion (Publisher-Kompontenen)
b) die Menge der konsumierenden Softwarekomponenten bzw. Funktionen (Subscriber-Komponenten)
c) die Menge der Knoten, auf denen das Signal von mindestens einer Komponente bzw. Funktion konsumiert wird.

Das Verfahren zur Erstellung von Signalgruppen läuft dann bevorzugt wie folgt ab:
(1) Die Gruppierungsinformationen werden während der Phase der Signalbeziehungsauflösung beim Aufstart des Steuergerätes für jedes Signal in einem Datenwort von fester Länge zusammengetragen (Signalwegetag 32).
(2) Die Listen aller Signalwegetags der Publish- bzw. Subscribe-Listen aller Komponenten bzw. Funktionen wird dann aufsteigend sortiert.
(3) Aus der sortierten Liste werden Abschnitte mit gleichem Signalwegetag abgelesen. Diese entsprechen den Signalen mit gleichem Verteilungsweg und somit den zu gruppierenden Signalen.
(4) Für jede so ermittelte Signalgruppe wird der nötige Signaldatenspeicher allokiert und eine Beschreibung der Gruppe und eine Anweisung für die notwendige Datenübertragung erstellt und in eine Liste angehängt ("Kopierliste" bzw. "Sendeliste").

Bevorzugt ist, dass der Datenspeicher oder Arbeitsspeicher für die Signalwegetags (Liste 33) nur während der Schritte (1) bis (3) für diese benötigt wird und im Schritt (4) für die Ablage der Gruppierungsinformationen wiederverwendet werden kann.

Die Idee beschreibt somit insgesamt ein Verfahren zur Reduktion von Ressourcenverbräuchen bei der Signaldatenübertragung zur Ausführungszeit eines verteilten Steuergerätes, in dem Signalkommunikationsbeziehungen in Form von Publish/Subscribe-Listen definiert sind. Die Reduktion wird durch eine Gruppierung von Signaldaten erreicht und besteht im Vergleich zu einem Pub/Sub-basierten Übertragungsverfahren ohne Gruppierung.

Die Signalgruppierung erfolgt somit nicht für eine Buskommunikation, sondern auch für Signale, die lediglich zwischen einzelnen Softwarefunktionen auf dem Steuergerät/Knoten übertragen werden (in AUTOSAR ist das die RTE-Schicht, im Vergleich zu einer herkömmlichen Com-Stack-Schicht). In dem Verfahren wird auch nach Informationen sortiert, die beim Startup von anderen Knoten (Prozessorsystemen des Steuergerätes) eingesammelt werden, namentlich die Publisher-Komponente als Signalquelle (Quellkomponente/Runnable) und die Menge der Subscriber-Komponenten als Signalsenken (Zielkomponenten/Runnable-Menge). Hierdurch ergibt sich eine auf die jeweilige Zusammenstellung von Komponenten in den Rechenknoten hin optimierte Signalgruppierung. Insbesondere erfolgt die Gruppierung automatisch anhand von zusammengetragenen Informationen über den Signalverbreitungsweg in einem Multi-SoC-Steuergerät.

Die Idee zielt auf die Ebene einzelner Softwarefunktionen innerhalb eines Multi-SoC-Steuergeräts (ECU), und hierbei sowohl auf die Kommunikation zwischen Software-Komponenten im gleichen Knoten als auch auf Kommunikation zwischen Knoten dieser ECU. In einem zweistufigen dynamischer Pub/Sub-Verfahren mit Discovery-Phase werden spezielle Daten (über die tatsächlichen Signalverbreitungswege) verwendet: die Signalwegetags. Damit kann eine effizientere Signalgruppierung vorgenommen werden als mit statischen Daten.

In dem Verfahren wird nach Informationen sortiert, die beim Startup von anderen Rechenknoten (Prozessorsystemen des Steuergerätes) eingesammelt werden können, namentlich die Signalquelle (Quellkomponente/Runnable) und die Menge der Signalsenken (Zielkomponenten/Runnable-Menge). Hierdurch ergibt sich eine auf die jeweilige Zusammenstellung von Komponenten in den Knoten hin optimierte Signalgruppierung.

Insgesamt zeigen die Beispiele, wie eine automatische Signalgruppierung in einer AUTOSAR RTE auf Basis von Signalverteilungswegen durchgeführt werden kann.

## Patentansprüche

1. Verfahren zum laufzeitbasierten Konfigurieren einer geräteinternen Signalübertragung in einem Steuergerät (11),
wobei sich in dem Steuergerät (11) mehrere Rechenknoten (15) befinden, die eigenständige Betriebssystem- und Basissoftwareinstanzen und jeweils Anteile der Applikationssoftware als Softwarekomponenten (17) ausführen, und wobei ein Rechenknoten (15) nicht direkt auf einen Speicher eines anderen Rechenknoten (15) zugreifen kann, und
wobei in einer Laufzeitumgebung (20) bei einem Aufstart des Steuergeräts (11),
Publisher-Komponenten (21) jeweils zumindest eine Publisher-Liste (33, 35) der von ihnen jeweils bereitgestellten Signale (18) und Subscriber-Komponenten (22) jeweils zumindest eine Subscriber-Liste (33, 35) der von ihnen benötigten Signale (18) bereitstellen,
**dadurch gekennzeichnet, dass**
für jede Subscriber-Komponente (22) für die von ihr benötigten Signale (18) ermittelt wird, welchen Signalweg (25) von einer der Publisher-Komponenten (21) zur Subscriber-Komponente (22) das jeweilige Signal (18) bei gegebenen Publisher-Listen (33, 35) durch das Steuergerät (11) hindurch nehmen muss,
für solche der benötigten Signale (18), für die jeweils ein identischer Signalweg (25) erkannt wird, eine Signalgruppe (G) definiert wird, indem für die Signale (18) der jeweiligen Signalgruppe (G) ein gemeinsamer Übertragungsbefehl in der Laufzeitumgebung (20) hinterlegt wird,
wobei
ein Signalweg (25) des Signals (18) eindeutig durch seine Publisher-Komponente (21) als Quelle und die Menge seiner Subscriber-Komponenten (22) als Senken gegeben ist, und durch Bestimmung aller Signalwege (25) und anschließenden Abgleich für alle Signale (18) die Signalgruppen (G) ermittelt werden
und
beim zyklischen Ausführen der hinterlegten Übertragungsbefehle der Subscriber-Komponenten (22) durch die Laufzeitumgebung (20) aktuelle Signaldaten (19) der Signale (18) einer jeweiligen Signalgruppe (G) jeweils als ein gemeinsames Datenpaket (27) von der jeweiligen Publisher-Komponente (21) zu der jeweiligen Subscriber-Komponente (22) der Signalgruppe (G) übertragen werden,
wobei in dem Steuergerät (11) mehrere Rechenknoten (15) betrieben werden, die über ein Datennetzwerk (16) verbunden sind, und für mehrere Signalwege (25), die vom selben Rechenknoten (15) als Quellknoten zum selben anderen Rechenknoten (15) als Zielknoten führen, im Quellknoten ein Sammelpuffer (29) und im Zielknoten ein Verteilerpuffer (30) bereitgestellt wird und die jeweiligen aktuellen Signaldaten (19) für die mehreren Signalwege (25) in dem Sammelpuffer (29) gesammelt werden und in einem gemeinsamen Netzwerkpaket (31) zum Verteilerpuffer (30) übertragen werden und vom Verteilerpuffer (30) aus zu der zumindest einen durch die identifizierten Signalwege (25) bestimmten Subscriber-Komponente (22) weiter übertragen werden,
wobei der Quellknoten und der Zielknoten jeweils einen Rechenknoten (15) darstellen und wobei auf dem Quellknoten zumindest eine Publisher-Komponente (21) für zumindest einen der identifizierten Signalwege (25) und auf dem Zielknoten zumindest eine Subscriber-Komponente (22) zum Empfangen zumindest eines der Signalwege (25) aufweist oder dort ausgeführt wird und
wobei die Datenpakete (27) mehrerer Signalgruppen (G) in einem Sammelpuffer (29) gesammelt werden und gemeinsam als Netzwerkpaket (31) über das Datennetzwerk (16) in den Verteilerpuffer (30) desselben Zielknotens übertragen werden und die Datenpakete (27) der einzelnen Signalgruppen (G) aus dem Verteilerpuffer (30) des Zielknotens heraus dann wieder getrennt voneinander zu der jeweiligen Subscriber-Komponente (22) übertragen werden.

2. Verfahren nach Anspruch 1, wobei zum Ermitteln der Signalgruppen (G) zu jedem der Signalwege (25) ein Signalwegetag (32) als Datenwort fester Länge konstruiert wird, das in einem ersten Bitfeld (34) die Publisher-Komponente (21), in einem zweiten Bitfeld (34) die Rechenknoten (15), auf welchen die Subscriber-Komponenten (22) ausgeführt werden, und in einem dritten Bitfeld (34) die Subscriber-Komponente (22) angibt, und die Signalwegetages (32) aller Signalwege (25) in einem Datenspeicher mittels eines Sortieralgorithmus sortiert werden und in dem Datenspeicher Abschnitte gleicher Signalwegetags (32) oder Abschnitte, in denen ein vorbestimmter Teil der Signalwegetags übereinstimmt, erkannt werden, durch welche dann jeweils eine der Signalgruppen (G) definiert ist.

3. Verfahren nach Anspruch 2, wobei zum Bilden zumindest eines der Bitfelder (34) ein Hash-Algorithmus verwendet wird, durch welchen unabhängig von der Menge an Eingaben immer eine Ausgabe mit der gleichen Länge erzeugt wird.

4. Verfahren nach einem der vorhergehenden Ansprüche, wobei für jede identifizierte Signalgruppe (G) jeweils in einem Datenspeicher ein Ausgabepuffer (23) für die zugehörige Publisher-Komponente (21) und ein Eingangspuffer (24) für die zugehörige Subscriber-Komponente (22) allokiert werden und die Publisher-Komponente (21) zyklisch jeweilige aktuelle Signaldaten (19) der Signalgruppe (G) in den Ausgabepuffer (23) schreibt und somit das jeweils aktuelle Datenpaket (27) in dem Ausgabepuffer (23) erzeugt, die Laufzeitumgebung (20) das Datenpaket (27) in den Eingangspuffer (24) überträgt und die Subscriber-Komponente (22) aus ihrem Eingangspuffer (24) die Signaldaten (19) des Datenpakets (27) einliest oder zum Einlesen bereitgestellt bekommt.

5. Verfahren nach einem der vorhergehenden Ansprüche, wobei bei zumindest einer Signalgruppe (G) in deren Datenpaketen (27) die Signaldaten (19) des jeweiligen Signals (18) der Signalgruppe (G) stets an demselben Offset (28) in dem Datenpaket (27) und ohne Kennzeichnung enthalten sind und der Zugriff auf die Signaldaten (19) durch die empfangende Subscriber-Komponente (22) für jedes Signal (18) der Signalgruppe (G) erfolgt, indem in dem Datenpaket (27) ausgehend von dem jeweiligen Offset (28) eine vorbestimmte Anzahl an Bytes gelesen wird und diese gelesenen Bytes als die aktuellen Signaldaten (19) des jeweiligen Signals (18) verwendet oder verfügbar gemacht werden.

6. Verfahren nach einem der vorhergehenden Ansprüche, wobei bei zumindest einer Signalgruppe (G) in den Datenpaketen (27) die jeweiligen Signaldaten (19) der Signale (18) der Signalgruppe (G) durch ein jeweiliges signalspezifisches Präfix und/oder Postfix abgegrenzt sind und die empfangende Subscriber-Komponente (22) in dem empfangenen Datenpaket (27) die jeweiligen Signaldaten (19) zumindest eines Signals (18) durch Suchen des jeweiligen Präfix und/oder Postfix findet und die angrenzenden Signaldaten (19) einliest oder wobei ein vorbestimmtes Paketdatenformat definiert ist, indem Signaldaten in ein Verzeichnis eingebettet sind.

7. Steuergerät (11) mit einer Prozessorschaltung mit mehreren Rechenknoten (15), von denen einer oder mehrere oder jeder ein System-on-Chip, SoC, ist und diese Rechenknoten (15) über einen Systembus und/oder ein Ethernet-Netzwerk für das Austauschen von Signalen (18) verbunden sind, wobei die Prozessorschaltung dazu eingerichtet ist, ein Verfahren nach einem der vorhergehenden Ansprüche durchzuführen.

8. Kraftfahrzeug (10) mit einem Steuergerät (11) nach Anspruch 7.

## Claims

1. A method for runtime-based configuration of a device-internal signal transmission in a control unit (11),
wherein multiple computing nodes (15) that execute independent operating system and basic software entities and in each case portions of the application software as software components are present in the control unit (11), and wherein one computing node (15) cannot directly access a memory of another computing node (15), and
wherein in a runtime environment (20), upon start-up of the control unit (11)
publisher components (21) each provide at least one publisher list (33, 35) of the signals (18) provided by the publisher components in each case, and subscriber components (22) each provide at least one subscriber list (33, 35) of the signals (18) required by the subscriber components,
**characterized in that**
for each subscriber component (22), for the signals required thereby it is determined, for given publisher lists (33, 35), which signal path (25) the particular signal (18) must take through the control unit (11) from one of the publisher components (21) to the subscriber component (22), for those required signals (18) for which an identical signal path (25) is identified in each case, a signal group (G) is defined by storing a shared transmission command in the runtime environment (20) for the signals (18) of the particular signal group (G),
wherein
a signal path (25) of the signal (18) is unequivocally designated by its publisher component (21) as a source, and the set of its subscriber components (22) is unequivocally designated as a sink, and the signal groups (G) are ascertained by determining all signal paths (25) and making a subsequent comparison for all signals (18)
and
upon cyclical execution of the stored transmission commands of the subscriber components (22) via the runtime environment (20), current signal data (19) of the signals (18) of a particular signal group (G) are transferred in each case as a shared data packet (27) from the particular publisher component (21) to the particular subscriber component (22) of the signal group (G),
wherein multiple computing nodes (15) that are connected via a data network (16) are operated in the control unit (11), and for multiple signal paths (25) that lead from the same computing node (15) as a source node to the same other computing node (15) as a target node, a collection buffer (29) is provided in the source node and a distributor buffer (30) is provided in the target node, and the particular current signal data (19) for the multiple signal paths (25) are collected in the collection buffer (29), and in a shared network packet (31) are transferred to the distributor buffer (30), and from the distributor buffer (30) are further transferred to the at least one subscriber component (22) determined by the identified signal paths (25),
wherein the source node and the target node each represent a computing node (15), and wherein on the source node at least one publisher component (21) for at least one of the identified signal paths (25) is included or executed thereon, and on the target node at least one subscriber component (22) for receiving at least one of the signal paths (25) is included or executed thereon, and
wherein the data packets (27) of multiple signal groups (G) are collected in a collection buffer (29) and transferred together as a network packet (31) across the data network (16) into the distributor buffer (30) of the same target node, and the data packets (27) of the individual signal groups (G) are then separately transferred from the distributor buffer (30) of the target node to the particular subscriber component (22).

2. The method according to claim 1, wherein for determining the signal groups (G) for each of the signal paths (25), a signal path tag (32) is constructed as a data word of fixed length, which in a first bit field (34) indicates the publisher component (21), in a second bit field (34) indicates the computing node (15) on which the subscriber components (22) are executed, and in a third bit field (34) indicates the subscriber component (22), and the signal path tags (32) of all signal paths (25) are sorted in a data memory by means of a sorting algorithm, and sections of identical signal path tags (32) or sections in which a predetermined portion of the signal path tags match are identified in the data memory, via which one of the signal groups (G) is then defined in each case.

3. The method according to claim 2, wherein for forming at least one of the bit fields (34), a hash algorithm is used, via which an output having the same length is always created, regardless of the quantity of inputs.

4. The method according to one of the preceding claims, wherein for each identified signal group (G), in a data memory in each case an output buffer (23) for the associated publisher component (21) is allocated, and an input buffer (24) for the associated subscriber component (22) is allocated, and the publisher component (21) cyclically writes respective current signal data (19) of the signal group (G) into the output buffer (23) and thus creates the respective current data packet (27) in the output buffer (23), the runtime environment (20) transfers the data packet (27) into the input buffer (24), and the subscriber component (22) reads the signal data (19) of the data packet (27) from its input buffer (24) or receives the signal data provided for reading.

5. The method according to one of the preceding claims, wherein for at least one signal group (G), the data packets (27) thereof always contain the signal data (19) of the particular signal (18) of the signal group (G) at the same offset (28) in the data packet (27) and without identification, and the access to the signal data (19) by the receiving subscriber component (22) takes place for each signal (18) of the signal group (G), in that in the data packet (27) a predetermined number of bytes is read, starting from the particular offset (28), and these read bytes are used or made available as the current signal data (19) of the particular signal (18).

6. The method according to one of the preceding claims, wherein for at least one signal group (G), in the data packets (27) the particular signal data (19) of the signals (18) of the signal group (G) are demarcated by a respective signal-specific prefix and/or postfix, and the receiving subscriber component (22) in the received data packet (27) finds the particular signal data (19) of at least one signal (18) by searching the respective prefix and/or postfix and reads the contiguous signal data (19), or wherein a predetermined packet data format is defined by embedding signal data in a directory.

7. A control unit (11) having a processor circuit with multiple computing nodes (15), of which one or more or each is a system-on-chip (SoC), and these computing nodes (15) are connected via a system bus and/or an Ethernet network for exchanging signals (18), wherein the processor circuit is configured to carry out a method according to one of the preceding claims.

8. A motor vehicle (10) having a control unit (11) according to claim 7.

## Revendications

1. Procédé de configuration basée sur le temps d'exécution d'une transmission de signal interne à un appareil, dans un appareil de commande (11),
dans lequel plusieurs nœuds de calcul (15) se trouvent dans l'appareil de commande (11) et exécutent des instances autonomes d'un système d'exploitation et d'un logiciel de base et respectivement des parties du logiciel d'application sous forme de composants logiciels (17), et dans lequel un nœud de calcul (15) ne peut pas accéder directement à une mémoire d'un autre nœud de calcul (15), et
dans lequel, dans un environnement d'exécution (20), lors d'un démarrage de l'appareil de commande (11),
des composants éditeurs (21) fournissent respectivement au moins une liste d'éditeurs (33, 35) des signaux (18) respectivement fournis par eux, et
des composants abonnés (22) fournissent respectivement au moins une liste d'abonnés (33, 35) des signaux (18) qu'ils nécessitent,
**caractérisé en ce que**
pour chaque composant abonné (22), il est établi pour les signaux (18) qu'il nécessite quel trajet de signal (25) d'un des composants éditeurs (21) jusqu'au composant abonné (22) le signal respectif (18) doit emprunter à travers l'appareil de commande (11) avec les listes d'éditeurs (33, 35) données,
pour ceux des signaux (18) nécessaires pour lesquels respectivement un trajet de signal identique (25) est reconnu, un groupe de signaux (G) est défini **en ce que** pour les signaux (18) du groupe de signaux (G) respectif une commande de transmission commune est mémorisée dans l'environnement d'exécution (20),
dans lequel
un trajet de signal (25) du signal est donné de manière univoque par son composant éditeur (21) en tant que source et la quantité de ses composants abonnés (22) en tant que collecteurs, et les groupes de signaux (G) sont établis par la détermination de tous les trajets de signal (25) et un rapprochement consécutif pour tous les signaux (18),
et
lors de l'exécution cyclique des commandes de transmission mémorisées des composants abonnés (22), l'environnement d'exécution (20) transmet des données de signal (19) actuelles des signaux (18) d'un groupe de signaux (G) respectif respectivement sous la forme d'un paquet de données commun (27) du composant éditeur (21) respectif au composant abonné (22) respectif du groupe de signaux (G),
dans lequel plusieurs nœuds de calcul (15) fonctionnent dans l'appareil de commande (11) qui sont reliés par l'intermédiaire d'un réseau de données (16), et pour plusieurs trajets de signal (25) qui vont du même nœud de calcul (15) en tant que nœud source au même autre nœud de calcul (15) en tant que nœud cible, un tampon collecteur (29) est fourni dans le nœud source et un tampon distributeur (30) est fourni dans le nœud cible, et les données de signal actuelles (19) respectives pour les plusieurs trajets de signal (25) sont collectées dans le tampon collecteur (29), et sont transmises au tampon distributeur (30) dans un paquet de réseau (31) commun, et sont retransmises du tampon distributeur (30) audit au moins un composant abonné (22) déterminé par les trajets de signal (25) identifiés,
dans lequel le nœud source et le nœud cible représentent respectivement un nœud de calcul (15), et dans lequel le nœud source présente au moins un composant éditeur (21) pour au moins l'un des trajets de signal (25) identifiés, et le nœud cible présente au moins un composant abonné (22) pour recevoir au moins l'un des trajets de signal (25) ou celui-ci y est exécuté, et
dans lequel les paquets de données (27) de plusieurs groupes de signaux (G) sont collectés dans un tampon collecteur (29) et sont transmis ensemble sous la forme d'un paquet de réseau (31) par l'intermédiaire du réseau de données (16) dans le tampon distributeur (30) du même nœud cible, et les paquets de données (27) des groupes de signaux (G) individuels sont alors transmis à nouveau séparément les uns des autres au composant abonné (22) respectif.

2. Procédé selon la revendication 1, dans lequel, pour établir les groupes de signaux (G) pour chacun des trajets de signal (25), une balise de trajet de signal (32) est composée sous la forme d'un mot de données de longueur fixe qui indique dans un premier champ de bits (34) le composant éditeur (21), dans un deuxième champ de bits (34) les nœuds de calcul (15) sur lesquels les composants abonnés (22) sont exécutés, et dans un troisième champ de bits (34) le composant abonné (22), et les balises de trajet de signal (32) de tous les trajets de signal (25) sont triées dans une mémoire de données au moyen d'un algorithme de tri, et dans la mémoire de données, des sections des mêmes balises de trajet de signal (32) ou des sections dans lesquelles une partie prédéterminée des balises de trajet de signal coïncide sont identifiées et définissent alors respectivement l'un des groupes de signaux (G).

3. Procédé selon la revendication 2, dans lequel, pour former au moins l'un des champs de bits (34), un algorithme de hachage est utilisé qui produit indépendamment de la quantité d'entrées toujours une sortie de la même longueur.

4. Procédé selon l'une quelconque des revendications précédentes, dans lequel, pour chaque groupe de signaux (G) identifié, respectivement dans une mémoire de données, un tampon de sortie (23) est alloué pour le composant éditeur (21) associé et un tampon d'entrée (24) est alloué pour le composant abonné (22) associé, et le composant éditeur (21) écrit de manière cyclique des données de signal actuelles (19) respectives du groupe de signaux (G) dans le tampon de sortie (23) et produit ainsi le paquet de données (27) respectivement actuel dans le tampon de sortie (23), l'environnement d'exécution (20) transmet le paquet de données (27) dans le tampon d'entrée (24) et le composant abonné (22) lit dans son tampon d'entrée (24) les données de signal (19) du paquet de données (27) ou les reçoit pour lecture.

5. Procédé selon l'une quelconque des revendications précédentes, dans lequel, pour au moins un groupe de signaux (G), dans les paquets de données (27) de celui-ci, les données de signal (19) du signal (18) respectif du groupe de signaux (G) sont toujours contenues avec le même décalage (28) dans le paquet de données (27) et sans marquage, et l'accès aux données de signal (19) est effectué par le composant abonné (22) récepteur pour chaque signal (18) du groupe de signaux (G) en ce que dans le paquet de données (27), un nombre prédéterminé d'octets est lu à partir du décalage (28) respectif, et ces octets lus sont utilisés ou rendus disponibles en tant que données de signal (19) actuelles du signal (18) respectif.

6. Procédé selon l'une quelconque des revendications précédentes, dans lequel, pour au moins un groupe de signaux (G), dans les paquets de données (27), les données de signal (19) respectives des signaux (18) du groupe de signaux (G) sont délimitées par un préfixe et/ou un suffixe respectif, spécifique au signal, et le composant abonné (22) récepteur trouve dans le paquet de données (27) reçu les données de signal (19) respectives d'au moins un signal (18) en cherchant le préfixe et/ou le suffixe respectif, et lit les données de signal (19) adjacentes, ou dans lequel un format de données de paquet prédéterminé est défini en ce que des données de signal sont incorporées dans un index.

7. Appareil de commande (11), comprenant un circuit de processeur pourvu de plusieurs nœuds de calcul (15) dont un ou plusieurs ou chacun est un système sur puce, SoC, et ces nœuds de calcul (15) sont reliés par l'intermédiaire d'un bus système et/ou d'un réseau Ethernet pour l'échange de signaux (18), le circuit de processeur étant conçu pour exécuter un procédé selon l'une quelconque des revendications précédentes.

8. Véhicule automobile (10), comprenant un appareil de commande (11) selon la revendication 7.
